# EUROPÄISCHE PATENTSCHRIFT

(11) **EP 3 481 687 B1**
(45) Veröffentlichungstag und Bekanntmachung des Hinweises auf die Patenterteilung: **19.02.2020**
(21) Anmeldenummer: 17732306.0
(22) Anmeldetag: 23.06.2017
(51) Int. Cl.: B60T 15/02, B60T 13/26

(54) **PARK-LÖSE-VENTIL FÜR EIN ANHÄNGEFAHRZEUG**
PARK-LOOSE VALVE FOR A TRAILER
SOUPAPE DE STATIONNEMENT POUR REMORQUE

(30) Priorität: 06.07.2016 DE 102016008215
(43) Veröffentlichungstag der Anmeldung: 15.05.2019
(73) Patentinhaber: WABCO Europe BVBA, 1170 Brussels (BE)
(72) Erfinder: CUYX, Mark, 1980 Zemst (BE); SIEKER, Armin, 33611 Bielefeld (DE); STENDER, Axel, 31787 Hameln (DE)
(74) Vertreter: Koschnitzki, Thomas
(86) Internationale Anmeldenummer: PCT/EP2017/000731
(87) Internationale Veröffentlichungsnummer: WO 2018/006991

(56) Entgegenhaltungen:
- EP-A1- 2 426 021
- EP-A2- 1 188 634
- EP-A2- 2 058 193
- EP-A2- 2 193 965
- WO-A1-2015/154787
- DE-A1- 19 818 982
- DE-A1-102007 061 908
- DE-A1-102011 101 438
- DE-A1-102012 101 871
- DE-B3-102007 053 767

## Beschreibung

Die Erfindung betrifft ein Park-Löse-Ventil für ein Anhängefahrzeug mit pneumatischer Bremsanlage und insbesondere zur Steuerung des Drucks in Federspeicher-Bremszylindern. Außerdem betrifft die Erfindung eine Ventilanordnung, eine pneumatische Bremsanlage und ein Anhängefahrzeug.

Die pneumatische Bremsanlage eines Anhängefahrzeugs wird typischerweise über zwei pneumatische Leitungen mit einem Zugfahrzeug verbunden. Eine Leitung führt Steuerdruck über einen Steueranschluss zum Anhängefahrzeug. Dieser Anschluss wird auch als "Bremse" bezeichnet. Die andere Leitung führt Vorratsdruck über einen als "Vorrat" bezeichneten Versorgungsanschluss zum Anhängefahrzeug.

Integriert ist eine Sicherheitsfunktion bei Abriss der Leitung für den Vorratsdruck. Hierzu wird der Druck in der Leitung überwacht. Bei zu großem Druckabfall wird das Anhängefahrzeug automatisch durch Federspeicherbremsen eingebremst.

Das Anhängefahrzeug weist einen Vorratsbehälter für Druckluft auf, der über den Versorgungsanschluss gespeist wird. Dadurch kann das Anhängefahrzeug über seine Betriebsbremsen mehrfach kurz hintereinander gebremst werden, ohne dass die hierfür erforderliche Druckluft zeitgleich über den Versorgungsanschluss zugeführt werden muss.

Moderne pneumatische Bremsanlagen weisen kombinierte Bremszylinder auf, nämlich mit Membran-Betriebsbremszylinder und Federspeicher-Bremszylinder in einer gemeinsamen Baugruppe. Dies hat den Vorteil, dass Bremskolben, Bremshebel und Bremsscheiben oder Bremstrommeln nur einmal je Baugruppe vorhanden sein müssen. Lediglich Federspeicher-Bremszylinder und Betriebsbremszylinder sind nebeneinander je Baugruppe vorhanden. Derartige kombinierte Bremszylinder werden auch als Tristop-Zylinder bezeichnet. Möglich ist aber auch eine getrennte Anordnung von Betriebsbremsen und Federspeicherbremsen.

In einem abgestellten und vom Zugfahrzeug getrennten Anhängefahrzeug sind die Federspeicherbremsen aktiviert, da die Federspeicher-Bremszylinder entlüftet sind. Zum Rangieren des Anhängefahrzeugs ist ein Lösen der Federspeicherbremsen erforderlich. Hierfür ist ein spezielles Park-Löse-Ventil vorgesehen, welches in einer Lösestellung die Federspeicher-Bremszylinder mit Druckluft aus dem Vorratsbehälter (des Anhängefahrzeugs) belüftet und so löst.

Nach Beendigung des Rangierens müssen die Federspeicher-Bremszylinder wieder entlüftet werden. Hierzu kann das Park-Löse-Ventil eine Parkstellung einnehmen.

In der Praxis kann das Park-Löse-Ventil aus zwei getrennt voneinander bedienbaren Ventileinheiten bestehen. Kompakter ist ein Ventil, in dem die beschriebenen Funktionalitäten soweit wie möglich zusammengefasst sind.

Die EP 2 426 021 A1 betrifft ein Parkventil für eine Anhängerbremsanlage. In das Parkventil ist ein Drucksicherungsventil integriert, welches für Druckschwankungen an einem Versorgungsanschluss den Lösedruck in Lösekammern einer Federspeicher-Feststellbremse sichert. Automatisiert wird die Drucksicherungsfunk-tion des Drucksicherheitsventils aufgehoben, wenn der Druck an dem Versorgungsanschluss einen Schwellenwert unterschreitet. Ferner ist ein Löseventil an einem Anhängerbremsventil angeordnet.

In der EP 1 386 810 B1 ist ein Kombiventil mit federnd aufgehängtem Doppelventilkörper offenbart. Eine Steuerstange ist zwischen drei Stellungen, Fahren- Parken- Rangieren, axial verschiebbar und durch eine Schiebehülse verriegelbar. Der Aufbau ist kompakt aber sehr komplex.

Die Federspeicher-Bremszylinder werden je nach Betriebsfall aus dem Vorratsdruck (über den Versorgungsanschluss) oder aus dem Vorratsbehälter des Anhängefahrzeugs gespeist. Eine Trennung der Leitungen für den Vorratsbehälter einerseits und für den Vorratsdruck andererseits ist deshalb sinnvoll.

Aufgabe der vorliegenden Erfindung ist die Schaffung eines (anderen) Park-Löse-Ventils kompakter Bauart und hoher Funktionalität. Vorteilhafterweise ist das Ventil so aufgebaut, dass mit nur geringem Aufwand eine Zusatzfunktion integriert werden kann. Verhindert werden soll ein unbeabsichtigtes Lösen der Federspeicherbremsen nach dem Anschließen der den Vorratsdruck führenden Leitung bzw. beim Übergang in eine Fahrtstellung. Vorzugsweise soll auch ein ungewollter Druckausgleich zwischen dem Anschluss für Vorratsdruck und dem Anschluss für Vorratsbehälterdruck vermieden werden.

Zur Lösung der Aufgabe weist das erfindungsgemäße Park-Löse-Ventil die Merkmale des Anspruchs 1 auf, vorzugsweise wie folgt:
a)
   - ein Anschluss für Vorratsdruck,
   - ein Anschluss für Vorratsbehälterdruck,
   - ein Ausgang für Entlüftung,
   - ein Anschluss als Druckausgang,
b) ein Steuerkolben zum Öffnen und Versperren einer Verbindung vom Anschluss für Vorratsbehälterdruck zum Anschluss als Druckausgang und zum Öffnen und Versperren einer Verbindung vom Ausgang für Entlüftung zum Anschluss als Druckausgang,
c) der Steuerkolben ist durch ein Bedienelement axial bewegbar zwischen einer Fahrtstellung und einer Parkstellung, wobei in Parkstellung die Verbindung vom Ausgang für Entlüftung zum Anschluss als Druckausgang geöffnet und die Verbindung vom Anschluss für Vorratsbehälterdruck zum Anschluss als Druckausgang versperrt ist,
d) der Steuerkolben ist in der Parkstellung und ohne Druck am Anschluss für Vorratsdruck durch einen Schieber mit einer axial wirkenden Kraft in einer Richtung von der Fahrtstellung zur Parkstellung belastet,
e) bei Druck am Anschluss für Vorratsdruck wirkt auf den Schieber eine axiale Kraft in eine Richtung von der Parkstellung zur Fahrtstellung des Steuerkolbens.

Schieber und Steuerkolben weisen eine gemeinsame axiale Richtung und Gegenrichtung auf. Die vom Schieber ausgehende Kraft und die auf den Schieber wirkende Kraft verlaufen in diesen Richtungen. Vorzugsweise ist in Fahrtstellung des Steuerkolbens die Verbindung vom Ausgang für Entlüftung zum Anschluss als Druckausgang versperrt und die Verbindung vom Anschluss für Vorratsbehälterdruck zum Anschluss als Druckausgang geöffnet.

Nach einem weiteren Gedanken der Erfindung ist ein zwischen einer Sperrstellung und einer Lösestellung bewegbares Sperrorgan vorgesehen, wobei Steuerkolben und Schieber in Sperrstellung (des Sperrorgans) miteinander zumindest derart gekoppelt sind, dass der Schieber den Steuerkolben, ausgehend von der Fahrtstellung, in Richtung auf die Parkstellung mitnehmen kann. Vorzugsweise besteht in Gegenrichtung keine Kopplung durch das Sperrorgan.

Nach einem weiteren Gedanken der Erfindung ist ein Entsperrorgan zum Steuern der Bewegung des Sperrorgans zwischen Sperrstellung und Lösestellung (des Sperrorgans) vorgesehen. Das Sperrorgan muss demnach nicht manuell betätigt werden. Vielmehr erfolgt mittelbar eine Steuerung über das Entsperrorgan.

Nach einem weiteren Gedanken der Erfindung wirkt das Entsperrorgan mit einem Federmittel zusammen, wobei das Federmittel das Sperrorgan insbesondere in Richtung auf die Lösestellung (des Sperrorgans) beaufschlagt und das Sperrorgan durch das Entsperrorgan in Richtung auf die Sperrstellung beaufschlagbar ist. Bei dem Federmittel handelt es sich vorzugsweise um eine Druckfeder. Somit ist das Sperrorgan nur aktiv bzw. in Sperrstellung, wenn das Entsperrorgan die Kraft des Federmittels überwindet.

Nach einem weiteren Gedanken der Erfindung ist der Steuerkolben hohl und das Entsperrorgan nach Art eines Kolbens im Inneren des Steuerkolbens bewegbar. Dabei können Steuerkolben und Entsperrorgan konzentrisch/koaxial zueinander ausgerichtet sein.

Nach einem weiteren Gedanken der Erfindung ist das Sperrorgan in einer zylindrischen Wandung des Steuerkolbens bewegbar gelagert und weist einen Gleitkopf zur Anlage an einer Gleitfläche des Entsperrorgans auf, wobei die Gleitfläche unter einem Winkel zur Axialrichtung des Entsperrorgans ausgerichtet ist. Je nach Position der Gleitfläche/Stellung des Entsperrorgans ist das Sperrorgan in Sperrstellung oder Lösestellung.

Nach einem weiteren Gedanken der Erfindung ist das Entsperrorgan mit einem Bedienelement versehen, welches über das Bedienelement des Steuerkolbens hinausragt. Dadurch sind beide Bedienelemente bzw. Entsperrorgan einerseits und Steuerkolben andererseits zumindest ein Stück weit unabhängig voneinander betätigbar.

Nach einem weiteren Gedanken der Erfindung ist das Entsperrorgan durch ein Federmittel axial beaufschlagt, nämlich in Richtung auf die Parkstellung des Steuerkolbens. Dabei stützt sich das Federmittel als Druckfeder vorzugsweise am Steuerkolben ab.

Nach einem weiteren Gedanken der Erfindung ist das Entsperrorgan mit dem Steuerkolben gekoppelt, derart, dass das Entsperrorgan in wenigstens einer Axialrichtung und relativ zum Steuerkolben nur bis zur Anlage eines Anschlags bewegbar ist. Vorzugsweise sind Entsperrorgan und Steuerkolben in beide Axialrichtungen durch je einen Anschlag gekoppelt.

Nach einem weiteren Gedanken der Erfindung ist vorgesehen, dass der Schieber den Steuerkolben in Parkstellung teilweise umfasst und dass der Schieber an einem freien Ende, welches den Steuerkolben in Parkstellung nicht umfasst, einen radial auswärts gerichteten Anschlag aufweist, insbesondere einen Kragen, zur Anlage an einem Absatz eines Gehäuses. Vorzugsweise ist der Schieber durch ein Federmittel/eine Druckfeder in Richtung auf die Parkstellung des Steuerkolbens belastet.

Nach einem weiteren Gedanken der Erfindung ist der Schieber nach Art eines Kolbens in einem Gehäuse verschiebbar gelagert, wobei der Schieber hohl ist und den Steuerkolben zumindest teilweise in sich aufnimmt, und wobei der Steuerkolben hohl ist und ein Entsperrorgan zumindest teilweise in sich aufnimmt. Vorzugsweise sind Schieber, Steuerkolben und Entsperrorgan konzentrisch bzw. koaxial zueinander ausgerichtet und angeordnet.

Nach einem weiteren Gedanken der Erfindung ist der Schieber in einem Gehäuse verschiebbar gehalten und an seinem Umfang mit zwei Dichtungen versehen, zwischen denen ein Arbeitsraum gebildet ist, wobei das Gehäuse innen im Bereich des Arbeitsraums eine Öffnung mit Verbindung zum Anschluss für Vorratsdruck aufweist. Bei anliegendem Vorratsdruck ausreichender Höhe bewegt sich der Schieber gegen die Kraft der Feder, sodass es zu einer Vergrößerung des Arbeitsraumes kommt.

Nach einem weiteren Gedanken der Erfindung ist vorgesehen, dass der Steuerkolben zumindest bereichsweise in einem Gehäuse verschiebbar gehalten ist und an seinem Umfang zwei Dichtungen aufweist, zwischen denen ein Verbindungsraum gebildet ist, dass das Gehäuse innen im Bereich des Verbindungsraums eine Öffnung mit Verbindung zum Anschluss für Vorratsbehälterdruck und eine Öffnung mit Verbindung zum Anschluss als Druckausgang aufweist, und dass der Steuerkolben wenigstens mit einer der Dichtungen über eine der Öffnungen hinweg bewegbar ist, sodass in einer Parkstellung des Steuerkolbens die Öffnungen nicht über den Verbindungsraum mit einander verbunden sind und in einer Fahrtstellung des Steuerkolbens die Öffnungen über den Verbindungsraum miteinander verbunden sind. Vorzugsweise sind die beiden Öffnungen in Axialrichtung des Gehäuses unterschiedlich positioniert. Dabei ist der axiale Abstand der Öffnungen voneinander geringer als der Abstand der beiden Dichtungen auf dem Steuerkolben voneinander. So ist es möglich, dass die Dichtungen zwischen sich einen Verbindungsraum einschließen, in dem auch beide Öffnungen liegen können.

Das erfindungsgemäße Park-Löse-Ventil erfüllt auch die an sich bekannte Abrissfunktion. In Fahrtstellung und bei ausreichendem Vorratsdruck hat der Arbeitsraum zwischen Schieber und Gehäuse seine volle Größe. Der Steuerkolben liegt mit dem Sperrorgan am Schieber an. Bei Ausfall des Vorratsdrucks fällt der Arbeitsraum durch das auf den Schieber wirkende Federmittel zusammen, der Schieber wird durch das Federmittel axial bewegt und nimmt den Steuerkolben bis in die Parkstellung mit. Dadurch wird die Verbindung vom Anschluss als Druckausgang zum Ausgang für Entlüftung hergestellt und die Federspeicherbremsen werden entlüftet, das Fahrzeug wird gebremst. Zugleich schließt der Steuerkolben die Verbindung vom Vorratsbehälterdruck zum Anschluss als Druckausgang.

Nach einem weiteren Gedanken der Erfindung ist ein Ventil zum Sperren oder Durchleiten des Vorratsdrucks auf den Schieber vorgesehen, wobei das Ventil in Abhängigkeit von einem Steuerdruck steuerbar ist und so eine Verbindung zum Durchleiten des Vorratsdrucks sperrt oder freigibt. Dadurch kann die Weiterleitung des Vorratsdrucks in Abhängigkeit von der Stellung des Ventils beeinflusst werden.

Nach einem weiteren Gedanken der Erfindung weist das Ventil einen ersten Ventilkörper auf, der in einem Ventilraum zwischen dem Anschluss für Vorratsdruck und einer in einen Arbeitsraum des Schiebers mündenden Öffnung vorgesehen ist, wobei der erste Ventilkörper bewegbar ist zwischen einer Öffnungsstellung und einer Sperrstellung, dabei nur in Öffnungsstellung bewegbar ist, solange Vorratsdruck anliegt und in seiner Öffnungsstellung verbleibt, solange Vorratsdruck anliegt, und wobei der erste Ventilkörper ohne Vorratsdruck in Sperrstellung verbleibt. Mit dieser Funktionalität des zusätzlichen Ventils weist das erfindungsgemäße Park-Löse-Ventil eine zusätzliche Sicherheitsfunktion auf. Dies ist wichtig beim Übergang von der Parkstellung zur Fahrtstellung bzw. beim Anschließen des Vorratsdrucks an das Anhängefahrzeug.

Nach einem weiteren Gedanken der Erfindung ist der erste Ventilkörper durch ein Federmittel in Richtung auf die Sperrstellung belastet. Dies vereinfacht den Aufbau und die Steuerung des ersten Ventilkörpers.

Nach einem weiteren Gedanken der Erfindung ist ein zweiter Ventilkörper zwischen dem ersten Ventilkörper und einem Steuereingang vorgesehen, wobei der erste Ventilkörper durch den zweiten Ventilkörper beaufschlagbar und so von der Sperrstellung in die Öffnungsstellung bewegbar ist. Somit erfolgt die Steuerung des ersten Ventilkörpers durch den zweiten Ventilkörper. Der zweite Ventilkörper kann über eine Hilfsenergie angesteuert werden.

Nach einem weiteren Gedanken der Erfindung ist der zweite Ventilkörper fliegend in seiner Ventilkammer angeordnet, also ohne Beaufschlagung durch Federmittel. Dies vereinfacht den Aufbau des Ventils im Bereich des zweiten Ventilkörpers.

Nach einem weiteren Gedanken der Erfindung weist der Ventilraum eine Entlüftung auf, nämlich dem zweiten Ventilkörper gegenüberliegend, wobei die Entlüftung insbesondere in Öffnungsstellung verschlossen ist. Vorzugsweise verschließt der erste Ventilkörper in seiner Öffnungsstellung die Entlüftung.

Nach einem weiteren Gedanken der Erfindung dichtet der erste Ventilkörper in seiner Sperrstellung einen Übergang von der Ventilkammer zum Ventilraum ab.

Nach einem weiteren Gedanken der Erfindung weist der erste Ventilkörper einen Überströmkanal auf, welcher in Öffnungsstellung mit Vorratsdruck beaufschlagbar ist. In Sperrstellung des ersten Ventilkörpers ist der Überströmkanal gesperrt. Es kann dann der Vorratsdruck den ersten Ventilkörper passieren.

Gegenstand der Erfindung ist auch eine pneumatische Bremsanlage mit einer Ventilanordnung oder einem Park-Löse-Ventil, wie voranstehend beschrieben.

Schließlich ist Gegenstand der Erfindung auch ein Anhängefahrzeug mit einer pneumatischen Bremsanlage, wie zuvor genannt.

Weitere Merkmale der Erfindung ergeben sich aus der Beschreibung im Übrigen und aus den Ansprüchen. Vorteilhafte Ausführungsbeispiele der Erfindung werden nachfolgend anhand von Zeichnungen näher erläutert. Es zeigen:
Fig. 1 eine pneumatische Bremsanlage eines Anhängefahrzeugs mit einem Notbremsventil erster Bauart und einem Park-Löse-Ventil erster Bauart in Parkstellung ohne Vorratsdruck,
Fig. 2 eine pneumatische Bremsanlage eines Anhängefahrzeugs mit einem Notbremsventil zweiter Bauart und dem Park-Löse-Ventil erster Bauart in Parkstellung ohne Vorratsdruck,
Fig. 3 das Park-Löse-Ventil erster Bauart in Parkstellung ohne Vorratsdruck,
Fig. 4 das Park-Löse-Ventil erster Bauart in Parkstellung aber mit anliegendem Vorratsdruck,
Fig. 5 das Park-Löse-Ventil erster Bauart in Fahrtstellung mit Vorratsdruck,
Fig. 6 das Park-Löse-Ventil erster Bauart in Lösestellung/Rangierstellung ohne Vorratsdruck,
Fig. 7 eine pneumatische Bremsanlage eines Anhängefahrzeugs mit dem Notbremsventil erster Bauart und einem Park-Löse-Ventil zweiter Bauart in Parkstellung ohne Vorratsdruck,
Fig. 8 eine pneumatische Bremsanlage eines Anhängefahrzeugs mit dem Notbremsventil zweiter Bauart und dem Park-Löse-Ventil zweiter Bauart in Parkstellung ohne Vorratsdruck,
Fig. 9 das Park-Löse-Ventil zweiter Bauart in Parkstellung ohne Vorratsdruck,
Fig. 10 das Park-Löse-Ventil zweiter Bauart in Fahrtstellung mit Vorratsdruck und nach erstem Bremsdruck,
Fig. 11 das Park-Löse-Ventil zweiter Bauart in Lösestellung/Rangierstellung ohne Vorratsdruck,
Fig. 12 das Park-Löse-Ventil zweiter Bauart in Parkstellung mit Vorratsdruck.

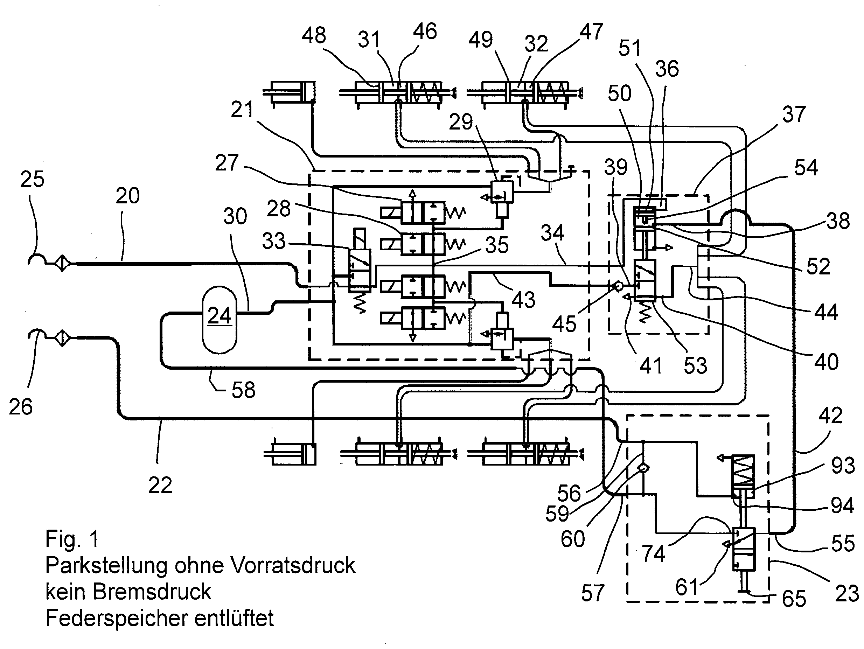

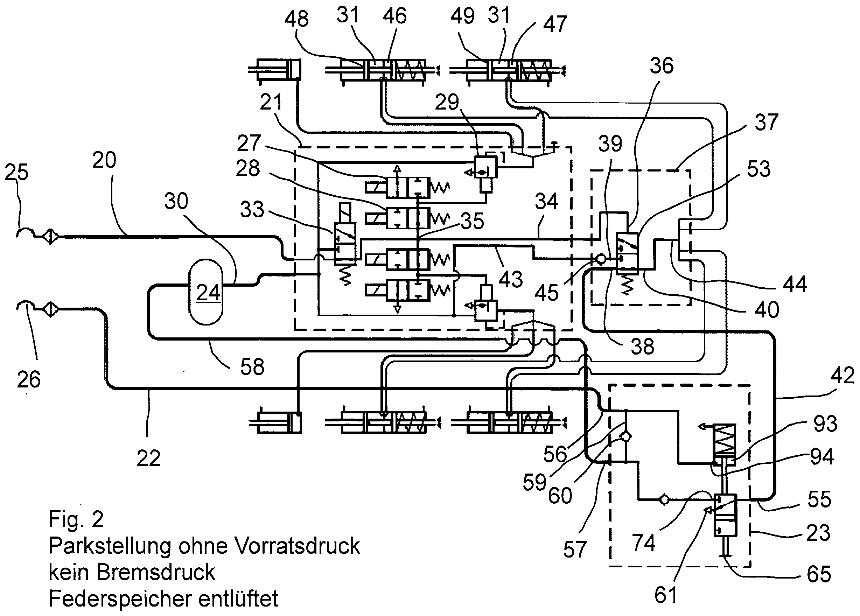

Fig. 1, 2 zeigen eine pneumatische Bremsanlage für ein Anhängefahrzeug. Eine Steuerdruckleitung 20 führt zu einem Anhängerbremsmodul 21. Eine Vorratsdruckleitung 22 führt zu einem Park-Löse-Ventil 23 erster Bauart und von diesem weiter über einen Vorratsbehälter 24 zum Anhängerbremsmodul 21. Der Steuerdruckleitung 20 ist ein Steueranschluss 25 zugeordnet, der Vorratsdruckleitung 22 ein Versorgungsanschluss 26. Zur Unterscheidung gegenüber dem Vorratsdruck in der Vorratsdruckleitung 22 wird nachfolgend der Druck in der Steuerdruckleitung 20 auch als Bremsdruck bezeichnet.

Das Anhängerbremsmodul 21 ist in bekannter Weise aufgebaut, nämlich je Fahrzeugseite mit zwei Magnetventilen 27, 28 und einem Relaisventil 29. Über die Magnetventile 27, 28 wird die Zufuhr des Steuerdrucks zu den Relaisventilen 29 geregelt. Letztere sind über eine Leitung 30 mit Verzweigungen zugleich an Vorratsbehälterdruck aus dem Vorratsbehälter 24 angeschlossen und geben ausgesteuerten Betriebsbremsdruck an Betriebsbremszylinder 31, 32 ab.

Weiterer Bestandteil des Anhängerbremsmoduls 21 ist ein Redundanzventil 33 als Magnetventil, mit dem die Verbindung zwischen der Steuerdruckleitung 20 und einer Leitung 34 trennbar und umstellbar ist. Auf diese Weise kann die Leitung 34 alternativ mit der Leitung 30 und dem Vorratsbehälterdruck aus dem Vorratsbehälter 24 verbunden werden. Die Leitung 34 verbindet außerdem über einen Abzweig 35 die Magnetventile 28 beider Fahrzeugseiten miteinander.

Weiterhin verbindet die Leitung 34 (bei entsprechend geschaltetem Redundanzventil 33) die Steuerdruckleitung 20 oder die Leitung 30 gemäß Fig. 1 mit einem ersten Steuereingang 36 einer Ventilanordnung 37 erster Bauart als Notbremsventil. Der Steuereingang 36 ist mittelbar mit der Steuerdruckleitung 20 verbunden, so dass Bremsdruck anliegen kann. Die Ventilanordnung 37 hat hier insbesondere die Funktion eines Notbremsventils mit Überlastschutz und weist hierzu noch einen zweiten Steuereingang 38, sowie einen ersten Anschluss 39, einen zweiten Anschluss 40 und einen dritten Anschluss 41 auf.

Der zweite Steuereingang 38 ist über eine Leitung 42 und das Park-Löse-Ventil 23 an die Vorratsdruckleitung 22 angeschlossen. Der erste Anschluss 39 ist über eine Leitung 43, ein Rückschlagventil 45 und das Anhängerbremsmodul 21 mit dem Vorratsbehälter 24 verbunden. Der zweite Anschluss 40 ist über eine Leitung 44 und Verzweigungen mit Federspeicher-Bremszylindern 46, 47 beider Fahrzeugseiten verbunden. Der dritte Anschluss 41 ist ein Entlüftungsanschluss.

In der gezeigten Bremsanlage sind die Betriebsbremszylinder 31, 32 Bestandteile sogenannter Kombizylinder, nämlich mit integrierten Federspeicher-Bremszylindern 46, 47, wobei die Kräfte beim Betätigen der Betriebsbremse einerseits und von Federspeichern andererseits auf jeweils dieselben Bremskolben 48, 49 wirken.

In Parkstellung gemäß Fig. 1 ist die pneumatische Bremsanlage entlüftet. Das heißt, die Federspeicher-Bremszylinder 46, 47 sind über die Leitung 44 und den Anschluss 40 mit dem Anschluss 41 zur Entlüftung verbunden. An der Ventilanordnung 37 liegen weder Steuerdruck noch Vorratsdruck oder Vorratsbehälterdruck an. Die Ventilanordnung 37 befindet sich in einer passiven Schaltstellung.

In einer nicht gezeigten aktiven Schaltstellung bzw. in einer Fahrtstellung liegt am zweiten Steuereingang 38 ein Vorratsdruck von mindestens 2,5 bar aus der Vorratsdruckleitung 22 an. Der Vorratsdruck wird hierzu von der Vorratsdruckleitung 22 durch das Park-Löse-Ventil 23 und durch die Leitung 42 bis zum zweiten Steuereingang 38 geführt. Der dort anliegende Vorratsdruck beaufschlagt einen Zylinderraum 50 zwischen zwei koaxial in Reihe angeordneten Kolben 51, 52, so dass eine Ventileinheit 53 durch Druck des Kolbens 52 eine in Fig. 1 nicht gezeigte Stellung einnimmt. Dabei liegt am ersten Steuereingang 36 in Fahrtstellung im Normalfall kein Druck an. Druckluft aus dem Vorratsbehälter 24 gelangt über die Leitung 43, den Anschluss 39, den Anschluss 40 und die Leitung 44 in die Federspeicher-Bremszylinder 46, 47 und zur Belüftung derselben.

Der Kolben 51 ist druckabhängig zwischen den Steuereingängen 36, 38 verschiebbar und in Richtung auf den Kolben 52 mit einem Abstandhalter 54 versehen. Ergänzend sind der Zylinderraum 50 so dimensioniert und die Steuereingänge 36, 38 so positioniert, dass bei Druck an wenigstens einem der Steuereingänge 36, 38 der Kolben 52 beaufschlagt wird (durch Druck oder den Abstandhalter 54) und die Ventileinheit 53 die nicht gezeigte Fahrtstellung einnimmt.

Da in Fig. 1 auch kein Steuerdruck aus der Steuerdruckleitung 20 anliegt, sind auch die Betriebsbremszylinder 31, 32 unbelüftet.

Das Park-Löse-Ventil 23 weist hier drei Anschlüsse auf, nämlich einen Anschluss 55 für die Leitung 42, einen Anschluss 56 für die Vorratsdruckleitung 22 und einen Anschluss 57 für eine Leitung 58 zum Vorratsbehälter 24 mit Vorratsbehälterdruck. Innerhalb des Park-Löse-Ventils 23 sind die Anschlüsse 56, 57 über einen Abzweig 59 mit Rückschlagventil 60 miteinander verbunden. Letzteres ist so angeordnet, dass der Vorratsbehälterdruck am Anschluss 57 nicht zu einem eventuell niedrigeren Vorratsdruck am Anschluss 56 abströmen kann.

Abweichend zu Figur 1 weist Figur 2 die Ventilanordnung 37 in einer zweiten Bauart auf, nämlich in vereinfachter Form. Die Ventileinheit 53 ist hier ein einfaches 3/2-Wegeventil, wobei in einer Stellung die Anschlüsse 38, 40 miteinander verbunden sind und in der anderen Stellung die Anschlüsse 39 und 40. Über den Steuereingang 36, wieder mit Verbindung zur Steuerdruckleitung 20, erfolgt die Verstellung der Ventileinheit 53.

Die Leitung 42 ist somit über den Anschluss 38 in der Stellung gemäß Fig. 2 mit dem Anschluss 40 verbunden, so dass die Federspeicherbremszylinder 46, 47 über die Ventileinheit 53 mit dem Park-Löse-Ventil 23 verbunden sind und dort über einen Ausgang für Entlüftung 61 entlüftet werden, wenn kein Druck in der Leitung 20 bzw. am Steuereingang 36 anliegt.

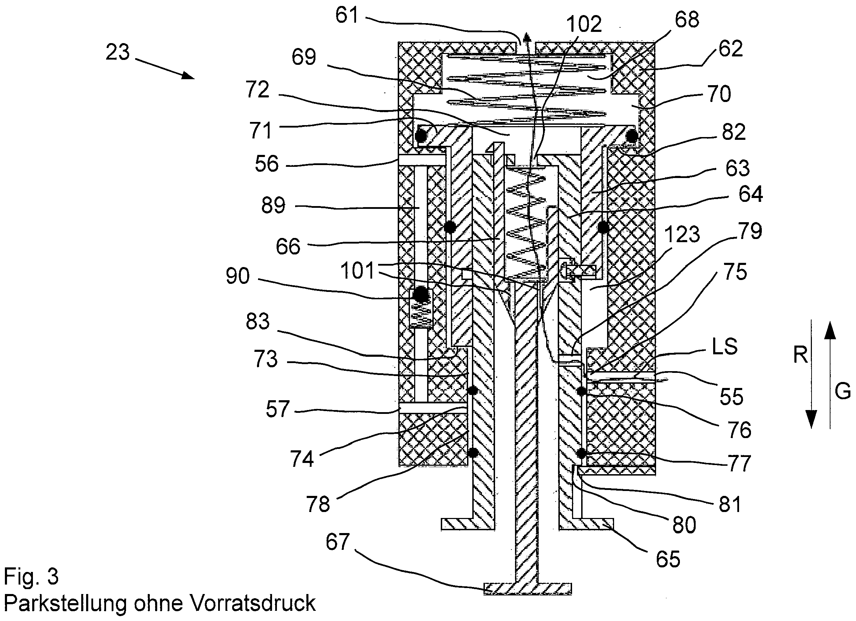

Nachfolgend werden anhand der Figuren 3 bis 6 Aufbau und Funktion einer ersten Ausführungsform des Park-Löse-Ventils 23 im Detail erläutert. Dabei bezieht sich die räumliche Ausrichtung der Teile durch die Begriffe "oben" und "unten" auf die Darstellung in den Figuren. Je nach Einbaulage des Park-Löse-Ventils 23 kann sich eine andere Ausrichtung ergeben. In den Figuren 3 bis 6 und 9 bis 12 ist eine Luftströmung LS durch das Park-Löse-Ventil 23 eingezeichnet.

In einem zylindrischen Gehäuse 62 sind konzentrisch angeordnet und koaxial bewegbar ein Schieber 63, ein Steuerkolben 64 mit Bedienelement 65 und ein Entsperrorgan 66 mit Bedienelement 67. Der Steuerkolben 64 ist somit außen zumindest teilweise vom Schieber 63 umgeben und nimmt innen das Entsperrorgan 66 auf. In Axialrichtung ragt das Bedienelement 67 des Entsperrorgans 66 nach unten/außen über das Bedienelement 65 des Steuerkolbens 64 hinaus.

Zur Aufnahme der genannten Teile Schieber 63, Steuerkolben 64 und Entsperrorgan 66 weist das Gehäuse 62 einen mehrfach abgestuften Innenraum auf, nämlich zunächst in Axialrichtung von oben nach unten betrachtet einen Aufnahmeraum 68 für ein Federmittel 69, welches hier eine Druckfeder ist. Es schließt ein verbreiterter Raum 70 an, zur Aufnahme eines radial aufwärts gerichteten Kragens 71 des Schiebers 63. Darauf folgt ein etwas schmalerer Schieberraum 72, auf den ein noch schmalerer Kolbenraum 73 folgt.

Im Bereich des Kolbenraums 73 weist das Gehäuse 62 innenseitig eine Öffnung 74 auf, die mit dem Anschluss für Vorratsbehälterdruck verbunden ist, sowie eine Öffnung 75, welche mit dem Anschluss als Druckausgang 55 verbunden ist. Die Öffnungen 74, 75 sind in Axialrichtung leicht versetzt zueinander angeordnet.

Der Steuerkolben 64 ist im Bereich des Kolbenraums 73 mit zwei umlaufenden Dichtungen 76, 77 versehen, zwischen denen ein umlaufender Verbindungsraum 78 gebildet ist, als Teil des Kolbenraums 73. Die Dichtungen 76, 77 weisen in axialer Richtung einen Abstand zueinander auf, der etwas größer ist als der axiale Versatz der Öffnungen 74, 75 zueinander. Oberhalb der oberen Dichtung 76 ist der Steuerkolben 64, der Öffnung 75 gegenüberliegend, mit einer Bohrung 79 versehen.

In der Parkstellung gemäß Fig. 3 befindet sich das Park-Löse-Ventil in derselben Schaltstellung wie in den Figuren 1 und 2. Es liegt kein Vorratsdruck am Anschluss 56 an. Der Verbindungsraum 78 ist zur Öffnung 74 mit dem Anschluss für Vorratsbehälterdruck 57 offen, hat aber keine Verbindung zum Anschluss als Druckausgang 55. Stattdessen ist der Anschluss als Druckausgang 55 über die Öffnung 75, den Kolbenraum 73, die Bohrung 79 mittelbar mit dem Ausgang für Entlüftung 61 verbunden, siehe Luftströmung LS.

Dabei ist der Steuerkolben 64 maximal aus dem Gehäuse 62 herausgezogen, so dass ein innerer Kolbenanschlag 80 an einem korrespondierenden Gehäuseanschlag 81 anliegt. Zugleich liegt der Kragen 71 des Schiebers 63 auf einem Absatz 82 zwischen dem Schieberraum 72 und dem Aufnahmeraum 68 an. Ein weiterer Absatz 83 ist zwischen Kolbenraum 73 und dem etwas breiteren Schieberraum 72 gebildet. Eine untere Stirnseite 84 des Schiebers 63 liegt in Fig. 3 am Absatz 83 an.

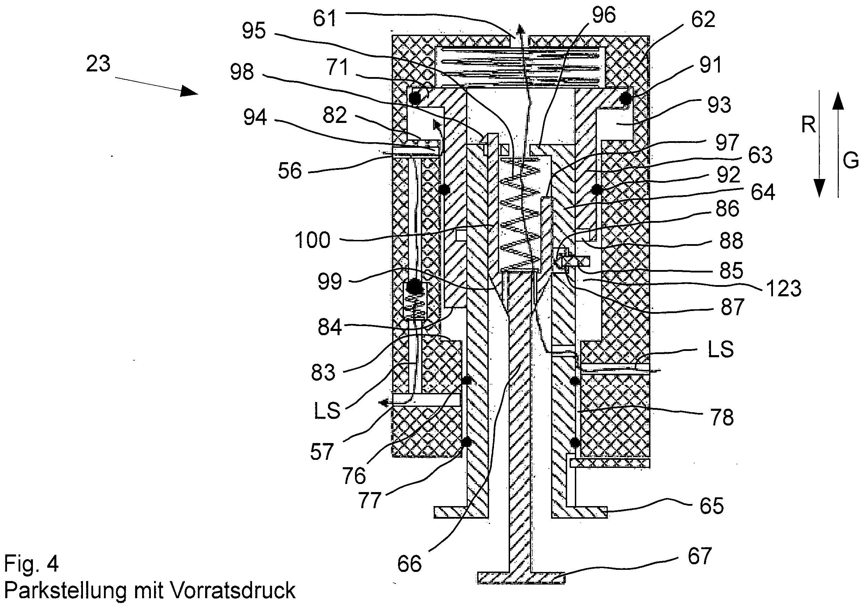

Der Steuerkolben 64 weist in seiner oberen Hälfte eine radial gerichtete Bohrung zur Aufnahme eines Sperrorgans 85 auf. Dabei handelt es sich um einen Stift mit Gleitkopf 86, welcher durch ein Federmittel 87/eine Druckfeder radial einwärts gegen das Entsperrorgan 66 gedrückt wird. In Parkstellung gemäß den Figuren 3 und 4 ragt das Entsperrorgan 66 mit einem Teil seiner Länge aus dem Steuerkolben 64 radial heraus. Der Schieber 63 weist eine Tasche 88 auf, in der das Sperrorgan 85 mit dem herausragenden Teil seiner Länge in Parkstellung Aufnahme findet, so dass der Steuerkolben 64 nicht weiter in einer axialen Richtung G auf die Fahrtstellung bzw. in Richtung auf den Kragen 71 des Schiebers 63 bewegbar ist. Vielmehr ist der Steuerkolben 64 in dieser Parkstellung durch den Schieber 63 in einer axialen Richtung R belastet, also von der Fahrtstellung in Richtung auf die Parkstellung.

Das Gehäuse 62 ist zwischen dem Anschluss für Vorratsdruck 56 und dem Anschluss für Vorratsbehälterdruck 57 mit einem Kanal 89 mit Rückschlagventil 90 versehen, welches eine Rückströmung vom Anschluss für Vorratsbehälterdruck 57 zum Anschluss für Vorratsdruck 56 verhindert.

Der Schieber 63 weist zwei umlaufende Dichtungen 91, 92 auf. Dabei erstreckt sich die obere Dichtung 91 radial außen am Kragen 71, während die untere Dichtung 92 nahe der Tasche 88 vorgesehen ist. Zwischen den Dichtungen 91, 92 ist ein Arbeitsraum 93 als Teil des Aufnahmeraums 68 gebildet. Der Arbeitsraum 93 ist über eine Öffnung 94 mit dem Anschluss für Vorratsdruck 56 verbunden und in seiner Größe veränderlich, je nach Stellung des Schiebers 63, vergleiche Fig. 3 und 4.

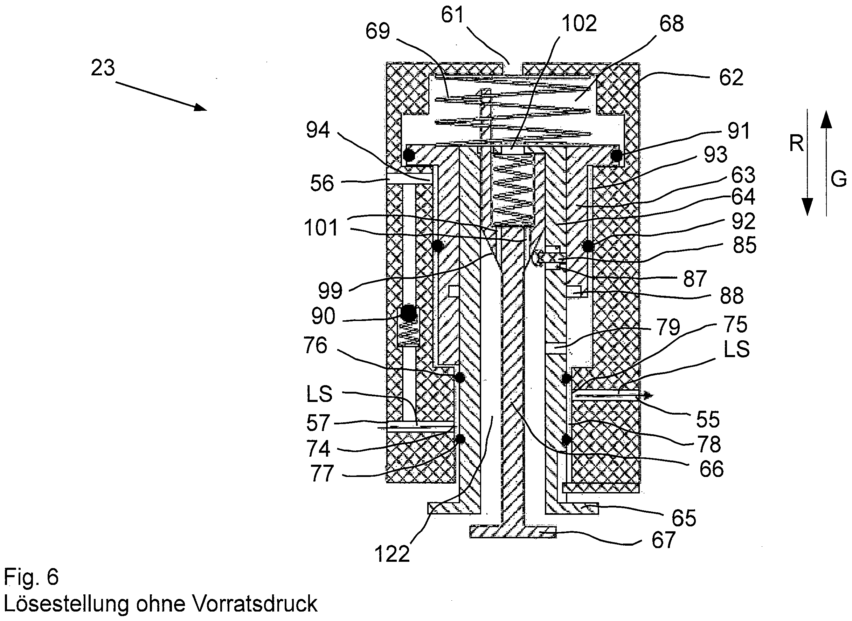

Das Entsperrorgan 66 ist nach Art eines Kolbens im Steuerkolben 64 axial bewegbar zwischen einer Sperrstellung entsprechend den Figuren 3, 4, 5 und einer Lösestellung gemäß Fig. 6. Dabei ist das Entsperrorgan 66 in Axialrichtung durch ein Federmittel 95 beaufschlagt. Zur Aufnahme des Federmittels 95 ist das Entsperrorgan 66 in seinem oberen Teil, insbesondere im oberen Drittel, hohl ausgebildet. Das Federmittel 95 drückt sich innen an einer oberen Stirnwand 96 des

Steuerkolbens 64 ab. Dabei ist die Bewegung des Entsperrorgans 66 relativ zum Steuerkolben 64 begrenzt durch einen unteren Anschlag 97 und einen oberen Anschlag 98 des Entsperrorgans 66. Je nach Stellung des Entsperrorgans 66 schlägt der Anschlag 98 außen an der Stirnwand 96 an oder der untere Anschlag 97 innen an der Stirnwand 96.

Das Entsperrorgan 66 weist einen konisch bzw. trichterförmig gestalteten Bereich mit einer entsprechend geneigten Gleitfläche 99 auf. Die Gleitfläche 99 schließt nach unten an einen zylindrischen Abschnitt 100 an. Das Sperrorgan 85 liegt mit dem Gleitkopf 86 in Parkstellung und in Fahrtstellung am zylindrischen Abschnitt 100 an. Durch Eindrücken des Bedienelements 67 bzw. Aufwärtsbewegen des Entsperrorgans 66 gelangt die schräge Gleitfläche 99 vor den Gleitkopf 86, so dass das Sperrorgan 85 radial einwärts gleitet, nämlich aus der Tasche 88 heraus.

Anschließend kann der Steuerkolben 64 relativ zum Schieber 63 axial aufwärts bewegt werden. Infolge dessen gelangt der Verbindungsraum 78 in der Lösestellung gemäß Fig. 6 trotz des entlüfteten Arbeitsraumes 93 und unterer Position des Schiebers 63 über die Öffnungen 74, 75, so dass der Anschluss für Vorratsbehälterdruck 57 in Verbindung steht mit dem Anschluss als Druckausgang 55 und die Federspeicher-Bremszylinder belüftet werden. Das Anhängefahrzeug kann dann rangiert werden.

Der zylindrische Abschnitt 100 umfasst das Federmittel 95. Im Bereich der Gleitfläche 99 weist das Entsperrorgan 95 axial gerichtete Bohrungen 101 auf und in der Stirnwand 96 eine Bohrung 102. In den Parkstellungen der Figuren 3 und 4 gelangt die Luftströmung LS von der Bohrung 79 durch die Bohrungen 101, 102 zum Ausgang für Entlüftung 61.

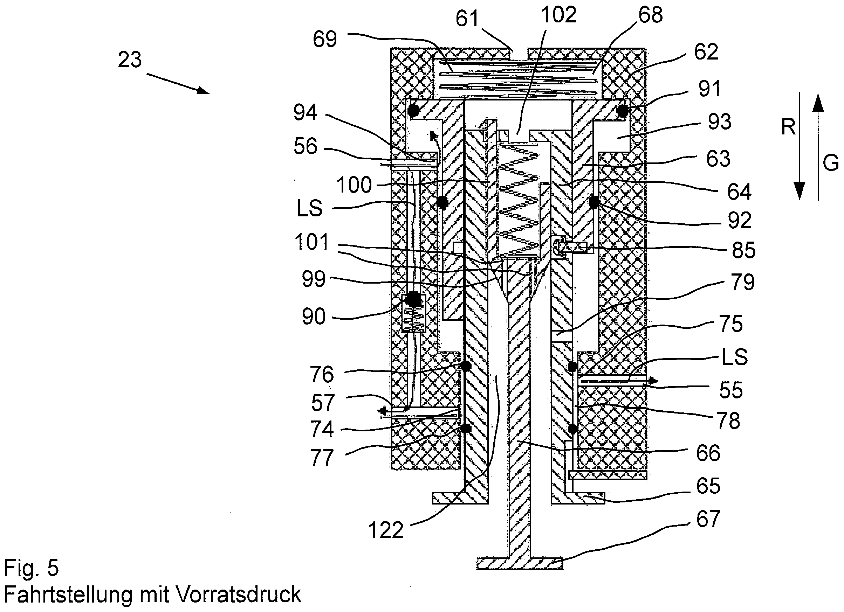

Eine Besonderheit besteht hinsichtlich des Übergangs von der Parkstellung gemäß Fig. 3 zur Fahrtstellung gemäß Fig. 5. Beim Ankoppeln des Zugfahrzeugs an das Anhängefahrzeug erhält der Anschluss für Vorratsdruck 56 Vorratsdruck. Die Federspeicher-Bremszylinder 46, 47 werden aber nicht automatisch belüftet, siehe Fig. 4. Vielmehr bleibt der Steuerkolben 64 zunächst in der Parkstellung gem. Fig. 3.

Zur Belüftung der Federspeicher-Bremszylinder ist zusätzlich noch eine manuelle Betätigung des Bedienelements 65 am Steuerkolben 64 erforderlich. Erst danach ergibt sich die Fahrtstellung gemäß Fig. 5, bei der eine Verbindung vom Anschluss für Vorratsbehälterdruck 57 zum Anschluss als Druckausgang 55 über den Verbindungsraum 78 besteht. Das Anhängefahrzeug kann sich demnach auch nach Anschluss des Vorratsdrucks erst bewegen, wenn das Bedienelement 65 manuell betätigt wurde. Dies erhöht die Sicherheit beim Ankoppeln des Anhängefahrzeugs.

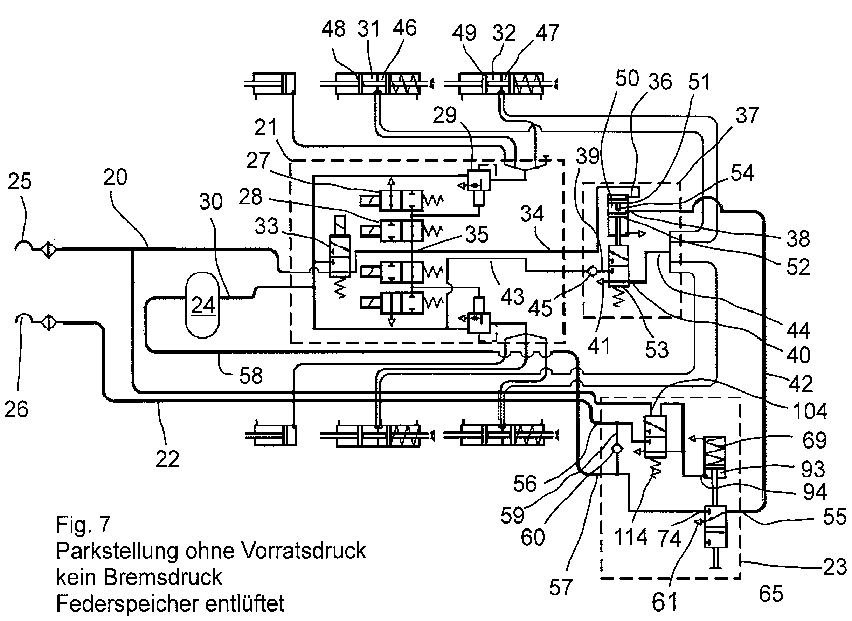

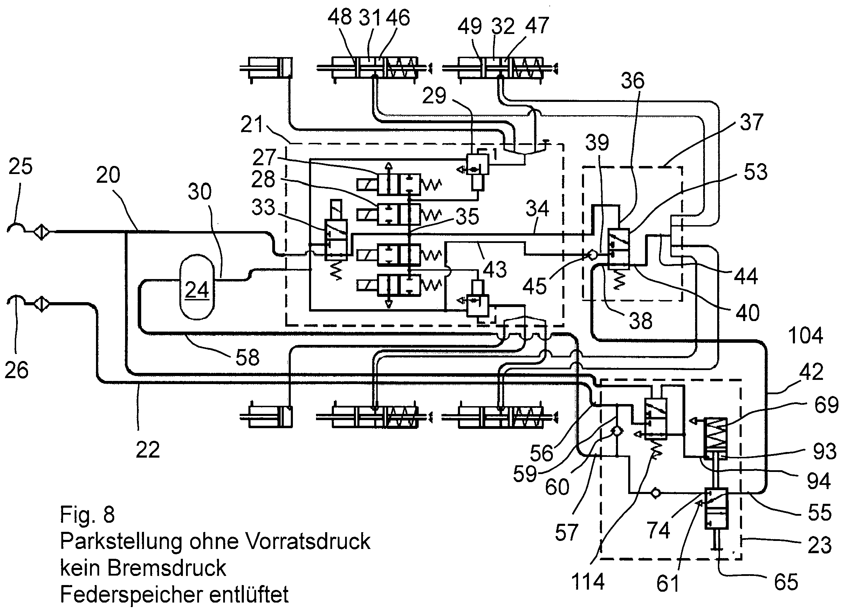

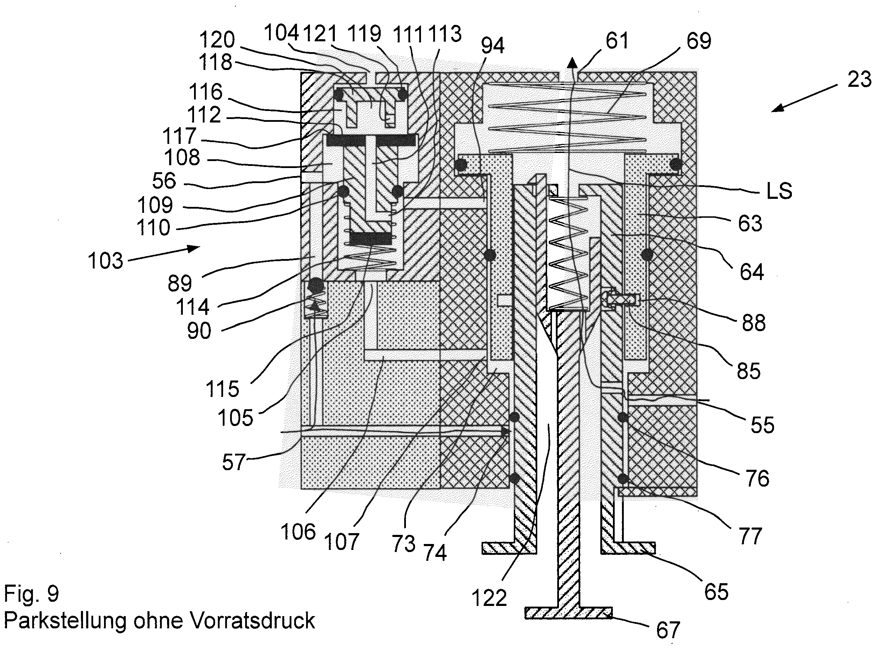

Die Fig. 7 bis 12 betreffen ein zweites Ausführungsbeispiel, nämlich mit einer zusätzlichen Funktion im Bereich des Park-Löse-Ventils 23. Dabei unterscheiden sich die Fig. 7 und 8 nur bezüglich der unterschiedlichen Ausbildung der Ventilanordnung 37, entsprechend dem Unterschied zwischen den Fig. 1 und 2. Das Park-Löse-Ventil 23 in Fig. 9 nimmt dieselbe Stellung ein wie in den Fig. 7 und 8.

Um den Übergang von der Parkstellung in die Fahrtstellung nach dem Anschließen des Vorratsdrucks für den Fahrer komfortabler und sicherer zu gestalten, ist ein zusätzliches Ventil 103 als Teil des Park-Löse-Ventils 23 vorgesehen. Das Ventil 103 ist zwischen den Anschluss für Vorratsdruck 56 und die Öffnung 94 geschaltet. Außerdem weist das Ventil 103 einen Steuereingang 104 und einen Ausgang zur Entlüftung 105 auf, welcher über eine Verbindung 106 zu einer Öffnung 107 in den Kolbenraum 73 führt. Von dort besteht die oben im Zusammenhang mit den Figuren 1 bis 6 bereits beschriebene Verbindung zum Ausgang für Entlüftung 61.

Das Rückschlagventil 90 ist wie im ersten Ausführungsbeispiel zwischen dem Anschluss für Vorratsdruck 56 und dem Anschluss für Vorratsbehälterdruck 57 vorgesehen. Allerdings sind der Kanal 89 und die Anschlüsse 56, 57 in diesem zweiten Ausführungsbeispiel räumlich dem Ventil 103 zugeordnet. Dabei liegen die für die Funktion des Ventils 103 wichtigen Bauteile zwischen der Öffnung 94 und dem Kanal 89 bzw. dem Anschluss 56.

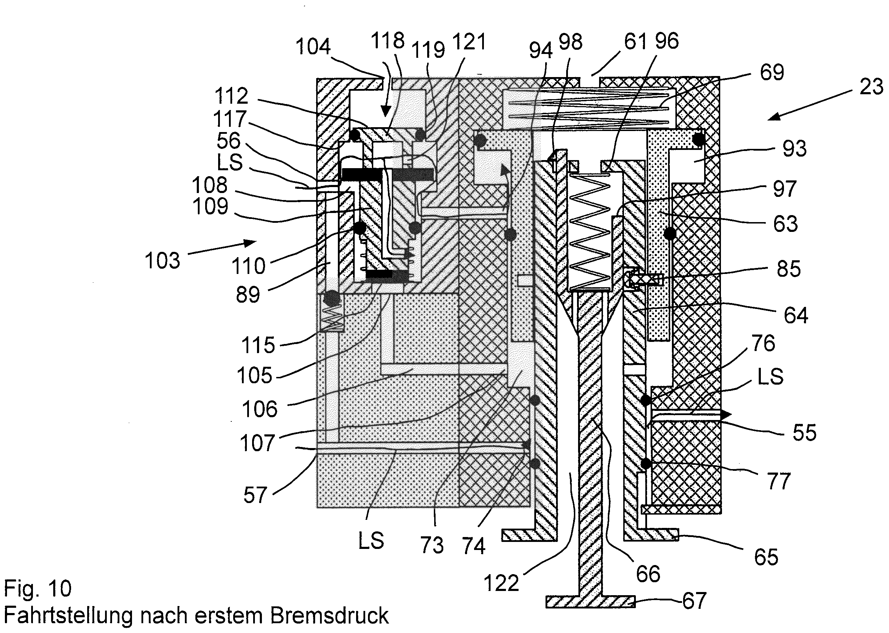

In einem Ventilraum 108 des Ventils 103 ist ein erster Ventilkörper 109 zwischen einer Öffnungsstellung und einer Sperrstellung bewegbar. In Figur 9 ist die Sperrstellung gezeigt. Das heißt, die Verbindung vom Anschluss für Vorratsdruck 56 zur Öffnung 94 ist versperrt. Figur 10 zeigt die Öffnungsstellung des ersten Ventilkörpers 109.

Der erste Ventilkörper 109 weist etwa auf halber Höhe eine umlaufende Dichtung 110 auf, so dass der Ventilraum 108 unterteilt ist in eine obere Hälfte mit Verbindung zum Anschluss für Vorratsdruck 56 und eine untere Hälfte mit Verbindung zur Öffnung 94 und mit dem Ausgang für Entlüftung 105. Außerdem weist der erste Ventilkörper 109 einen Verbindungskanal 111 auf, welcher sich von einer Oberseite 112 bis zu einer Umfangsseite 113 unterhalb der Dichtung 110 erstreckt. Schließlich ist der erste Ventilkörper 109 durch ein Federmittel 114 bzw. eine Druckfeder im Bereich des Ausgangs für Entlüftung 105 in Aufwärtsrichtung beaufschlagt.

Eine Unterseite 115 des ersten Ventilkörpers 109 ist als Dichtfläche ausgebildet und verschließt in Öffnungsstellung den Ausgang für Entlüftung 105. Dazu korrespondierend ist die Oberseite 112 außerhalb des Verbindungskanals 111 als Dichtfläche ausgebildet und verschließt in Sperrstellung einen Übergang vom Ventilraum 108 zu einer nach oben anschließenden Ventilkammer 116.

Die obere Hälfte des Ventilraums 108 weist einen etwas größeren Querschnitt auf als die untere Hälfte. Korrespondierend hierzu erstreckt sich die Oberseite 112 mit Dichtfläche über den zylindrischen Querschnitt des ersten Ventilkörpers 109 im Übrigen hinaus. Randseitig liegt die Oberseite 112 mit Dichtfläche in der Sperrstellung gemäß Fig. 9 an einem oberen umlaufenden Absatz 117 an. Dieser Absatz 117 ist zugleich der Übergang vom Ventilraum 108 in die Ventilkammer 116.

In der Ventilkammer 116 ist ein zweiter Ventilkörper 118 zwischen einer oberen, unbeaufschlagten Position und einer unteren, mit Steuerdruck beaufschlagten Position bewegbar. Auch ist der zweite Ventilkörper 118 mit einer umlaufenden Dichtung 119 versehen. Unterseitig, also in Richtung auf den ersten Ventilkörper 109, weist der zweite Ventilkörper 118 eine Vertiefung 120 auf, die über dem Verbindungskanal 111 angeordnet ist bzw. diesem gegenüberliegt. In einer Wandung der Vertiefung 120 ist eine Bohrung 121 als Überströmkanal vorgesehen.

In der Parkstellung gem. Fig. 9 sind die Federspeicherbremszylinder 46, 47 entlüftet. Entsprechend besteht eine Verbindung vom Anschluss als Druckausgang 55 zum Ausgang für Entlüftung 61. Vorratsdruck liegt nicht an. Steuerkolben 64 und Schieber 63 befinden sich in der selben Stellung wie in Fig. 3. Außerdem befindet sich der erste Ventilkörper 109 in seiner Sperrstellung. Die Oberseite 112 liegt mit ihrer Dichtfläche am Absatz 117 an, so dass keine Verbindung von der Ventilkammer 116 zum Ventilraum 108 besteht. Der zweite Ventilkörper 118 ist keiner Position zugeordnet und übt keine Kraft auf den ersten Ventilkörper 109 aus.

Nach dem Anschließen des Vorratsdrucks liegt im Ventilraum 108 Vorratsdruck vor. Der erste Ventilkörper 109 bleibt in der Position gemäß Fig. 9. Bedienelemente 65, 67 bleiben herausgezogen, wie in Fig. 4.

Zum Einstellen der Fahrtstellung wird hier nicht das Bedienelement 65 betätigt. Vielmehr tippt der Fahrer einmal auf die Bremse und beaufschlagt so den Steuereingang 104 mit Bremsdruck. Dadurch wird der zweite Ventilkörper 118 abwärts bewegt und drückt gegen die Oberseite 112 des ersten Ventilkörpers 109. Die Oberseite 112 löst sich mit ihrer Dichtfläche vom Absatz 117. In Folge dessen gleitet die Dichtung 110 abwärts bis unter die Verbindung zur Öffnung 94. Der Vorratsdruck gelangt durch den Ventilraum 108 in die Verbindung zur Öffnung 94 und wird im Arbeitsraum 93 wirksam. Dadurch bewegt sich der Schieber 63 aufwärts und nimmt über das Sperrorgan 85 den Steuerkolben 64 mit. Auch wird das Entsperrorgan 66 durch das Federmittel 95 mit bewegt, so dass sich die Position gem. Fig. 10 ergibt, analog Fig. 5.

In dieser Fahrtstellung nach erstmaliger Bremsbetätigung befindet sich der erste Ventilkörper 109 in seiner Öffnungsstellung. Dabei verschließt die Dichtfläche der Unterseite 115 den Ausgang für Entlüftung 105. Der Vorratsdruck gelangt zwar durch den Verbindungskanal 111 bis in die untere Hälfte des Ventilraums 108, nicht jedoch in den Ausgang für Entlüftung 105.

Somit ist für die Einstellung der Fahrtstellung eine Betätigung von Bedienelement 65 oder Bedienelement 67 nicht erforderlich. Es muss lediglich einmal das Bremspedal betätigt werden um Druck am Steuereingang 104 bereit zu stellen. In der sich ergebenden Schaltstellung/Fahrtstellung gemäß Fig. 10 ist der Anschluss für Vorratsbehälterdruck 57 mit dem Anschluss als Druckausgang 55 verbunden.

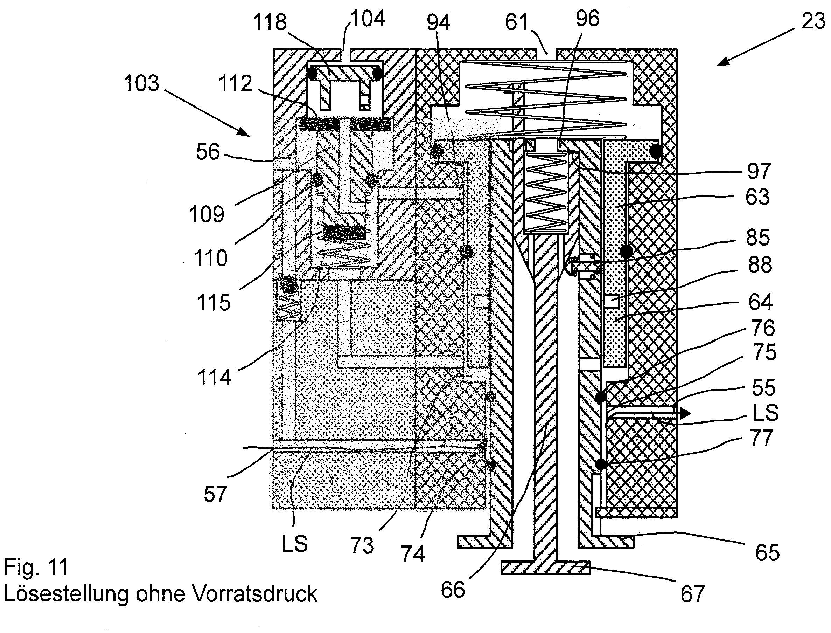

Ausgehend von der Parkstellung ohne Vorratsdruck gemäß Fig. 9, kann ein Rangieren des Anhängefahrzeugs gewünscht sein. Erforderlich ist dann eine Belüftung der Federspeicher-Bremszylinder 46, 47 aus dem Vorratsbehälter 24. Hierzu wird das Bedienelement 67 mit dem Entsperrorgan 66 betätigt, also nach oben gedrückt. Dadurch gleitet das federbelastete Sperrorgan 85 aus der Tasche 88 und es ergibt sich die Position gemäß Fig. 11. Der untere Anschlag 97 kommt an der Stirnwand 96 innen zur Anlage und nimmt den Steuerkolben 64 so weit mit, bis die Öffnungen 74, 75 zwischen den Dichtungen 76, 77 liegen und Vorratsbehälterdruck vom Anschluss für Vorratsbehälterdruck 57 zum Anschluss als Druckausgang 55 durchgesteuert wird. Alternativ kann der Steuerkolben 64 aktiv betätigt werden, da das Sperrorgan 85 nicht mehr in Sperrstellung steht. Die Federspeicher-Bremszylinder 46, 47 werden belüftet und das Anhängefahrzeug ist rangierbar. Die beiden Ventilkörper 109 und 118 befinden sich in der Position gemäß Fig. 9, da kein Vorratsdruck anliegt.

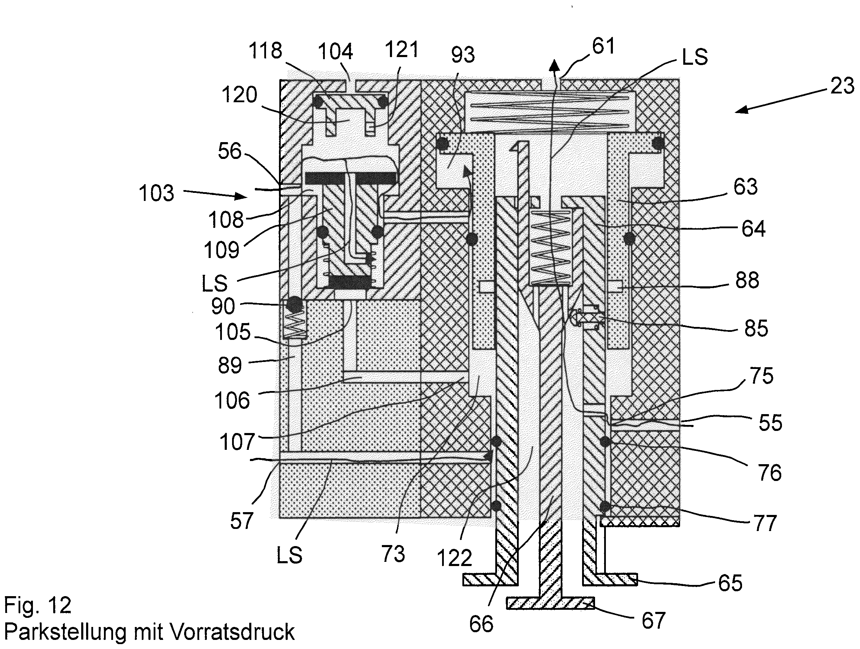

Ausgehend von der Fahrtstellung gemäß Fig. 10 ist die Parkstellung gemäß Fig. 12 einstellbar. Das Anhängefahrzeug ist noch mit dem Zugfahrzeug verbunden. Entsprechend liegt Vorratsdruck am Anschluss 56 an. Der Vorratsdruck wird durchgesteuert bis in den Arbeitsraum 93 und der Schieber 63 befindet sich dadurch in seiner oberen Position. Da am Steuereingang 104 kein Bremsdruck anliegt, ist die Position des zweiten Ventilkörpers 118 nicht definiert. Zur Einnahme der Parkstellung wurde das Bedienelement 67 des Entsperrorgans 66 betätigt, also nach oben bewegt. Das federbelastete Sperrorgan 85 gleitet aus der Tasche 88. Anschließend kann das Bedienelement 65 mit dem Steuerkolben 64 herausgezogen, also nach unten bewegt werden, so dass sich die Stellung gemäß Fig. 12 ergibt. Damit liegt die Öffnung 75 oberhalb der beiden Dichtungen 76, 77. Der Vorratsbehälterdruck ist abgesperrt. Der Druck aus den Federspeicher-Bremszylindern 46, 47 kann über den Anschluss als Druckausgang 55, die Bohrung 79, die Bohrungen 101, 102 zum Ausgang für Entlüftung 61 abströmen. Anschließend ist das Anhängefahrzeug durch die Federspeicherbremsen gebremst.

In den beschriebenen Ausführungsbeispielen besteht eine Entlüftungsmöglichkeit von der Bohrung 79 auch über einen zwischen dem Entsperrorgan 66 und dem Steuerkolben 64 gebildeten Ringraum 122. Vorzugsweise ist dieser Ringraum 122 aber in Richtung auf das Bedienelement 67 durch eine nicht gezeigte Manschette oder andere Abdeckung verschlossen, so dass die Entlüftung ausschließlich über den Ausgang als Entlüftung 61 erfolgt.

In der Ausführungsform der Fig. 3 bis 6 ist die Tasche 88 etwas anders angeordnet als in den Fig. 9 bis 12. Gemäß Fig. 3 bis 6 schließt an die Tasche 88 nach unten ein axial gerichteter Schlitz 123 an, so dass Schieber 63 und Sperrorgan 85 nur in einer axialen Richtung miteinander gekoppelt sind. Das Sperrorgan 85 kann den Schieber 63 nach oben mitnehmen, nicht jedoch nach unten, siehe insbesondere Fig. 4. Dort ist das Sperrorgan 85 nach unten aus der Tasche 88 herausbewegt und befindet sich im Schlitz 123, welcher nach unten offen sein kann. In der Ausführungsform der Fig. 9 bis 12 ist kein Schlitz im Anschluss an die Tasche 88 vorgesehen. Entsprechend sind dort Sperrorgan 85 und Schieber 63 in beide axiale Richtungen miteinander gekoppelt.

## Patentansprüche

1. Park-Löse-Ventil (23) für ein Anhängefahrzeug mit pneumatischer Bremsanlage, und mit folgenden Merkmalen:
a)
- ein Anschluss für Vorratsdruck (56),
- ein Anschluss für Vorratsbehälterdruck (57),
- ein Ausgang für Entlüftung (61),
- ein Anschluss als Druckausgang (55),
b) ein Steuerkolben (64) zum Öffnen und Versperren einer Verbindung vom Anschluss für Vorratsbehälterdruck (57) zum Anschluss als Druckausgang (55) und zum Öffnen und Versperren einer Verbindung vom Ausgang für Entlüftung (61) zum Anschluss als Druckausgang (55),
c) der Steuerkolben (64) ist durch ein Bedienelement (65) axial bewegbar zwischen einer Fahrtstellung und einer Parkstellung, wobei in Parkstellung die Verbindung vom Ausgang für Entlüftung (61) zum Anschluss als Druckausgang (55) geöffnet und die Verbindung vom Anschluss für Vorratsbehälterdruck (57) zum Anschluss als Druckausgang (55) versperrt ist,
d) der Steuerkolben (64) ist in der Parkstellung und ohne Druck am Anschluss für Vorratsdruck (56) durch einen Schieber (63) mit einer axial wirkenden Kraft in einer Richtung (R) von der Fahrtstellung zur Parkstellung belastet,
e) bei Druck am Anschluss für Vorratsdruck (56) wirkt auf den Schieber (63) eine axiale Kraft in eine Richtung (G) von der Parkstellung zur Fahrtstellung des Steuerkolbens (64).

2. Park-Löse-Ventil nach Anspruch 1, **gekennzeichnet durch** ein zwischen einer Sperrstellung und einer Lösestellung bewegbares Sperrorgan (85), wobei Steuerkolben (64) und Schieber (63) in Sperrstellung miteinander derart gekoppelt sind, dass der Schieber (63) den Steuerkolben (64), ausgehend von der Fahrtstellung, in Richtung (R) auf die Parkstellung mitnehmen kann.

3. Park-Löse-Ventil nach Anspruch 1 oder 2, **gekennzeichnet durch** ein Entsperrorgan (66) zum Steuern der Bewegung des Sperrorgans (85) zwischen Sperrstellung und Lösestellung.

4. Park-Löse-Ventil nach Anspruch 3, **dadurch gekennzeichnet, dass** das Entsperrorgan (66) mit einem Federmittel , (87) des Sperrorgans (85) zusammenwirkt, wobei das Federmittel (87) das Sperrorgan (85) insbesondere in Richtung auf die Lösestellung beaufschlagt und das Sperrorgan (85) durch das Entsperrorgan (66) in Richtung auf die Sperrstellung beaufschlagbar ist.

5. Park-Löse-Ventil nach Anspruch 3 oder 4, **dadurch gekennzeichnet, dass** der Steuerkolben (64) hohl ist und dass das Entsperrorgan (66) nach Art eines Kolbens im Inneren des Steuerkolbens (64) bewegbar ist.

6. Park-Löse-Ventil nach Anspruch 5, **dadurch gekennzeichnet, dass** das Sperrorgan(85) in einer Wandung des Steuerkolbens (64) bewegbar gelagert ist und einen Gleitkopf zur Anlage an einer Gleitfläche (99) des Entsperrorgans (66) aufweist, und dass die Gleitfläche (99) unter einem Winkel zur Axialrichtung des Entsperrorgans (66) ausgerichtet ist.

7. Park-Löse-Ventil nach Anspruch 5 oder 6, **dadurch gekennzeichnet, dass** das Entsperrorgan (66) mit einem Bedienelement (67) versehen ist, welches über das Bedienelement (65) des Steuerkolbens (64) hinaus ragt.

8. Park-Löse-Ventil nach Anspruch 5 oder einem der weiteren voranstehenden Ansprüche, **dadurch gekennzeichnet, dass** das Entsperrorgan (66) durch ein Federmittel (95) axial beaufschlagt ist in Richtung (R) auf die Parkstellung des Steuerkolbens (64).

9. Park-Löse-Ventil nach Anspruch 3 oder einem der weiteren voranstehenden Ansprüche, **dadurch gekennzeichnet, dass** das Entsperrorgan (66) mit dem Steuerkolben (64) gekoppelt ist, derart, dass das Entsperrorgan (66) in wenigstens einer Axialrichtung und relativ zum Steuerkolben (64) nur bis zur Anlage eines Anschlags (97, 98) bewegbar ist.

10. Park-Löse-Ventil nach Anspruch 1 oder einem der weiteren voranstehenden Ansprüche, **dadurch gekennzeichnet, dass** der Schieber (63) den Steuerkolben (64) in Parkstellung teilweise umfasst, und dass der Schieber (63) an einem freien Ende, welches den Steuerkolben (64) in Parkstellung nicht umfasst, einen radial auswärts gerichteten Anschlag aufweist, insbesondere einen Kragen (71), zur Anlage an einem Absatz (82) eines Gehäuses (62).

11. Park-Löse-Ventil nach Anspruch 1 oder einem der weiteren voranstehenden Ansprüche, **dadurch gekennzeichnet, dass** der Schieber (63) nach Art eines Kolbens in einem Gehäuse (62) verschiebbar gelagert ist, dass der Schieber (63) hohl ist und den Steuerkolben (64) zumindest teilweise in sich aufnimmt, und dass der Steuerkolben (64) hohl ist und ein Entsperrorgan (66) zumindest teilweise in sich aufnimmt.

12. Park-Löse-Ventil nach Anspruch 1 oder einem der weiteren voranstehenden Ansprüche, **dadurch gekennzeichnet, dass** der Schieber (63) in einem Gehäuse (62) verschiebbar gehalten ist und an seinem Umfang zwei Dichtungen (91, 92) aufweist, zwischen denen ein Arbeitsraum (93) gebildet ist, und dass das Gehäuse (62) innen im Bereich des Arbeitsraumes (93) eine Öffnung (94) mit Verbindung zum Anschluss für Vorratsdruck (56) aufweist.

13. Park-Löse-Ventil nach Anspruch 1 oder einem der weiteren voranstehenden Ansprüche, **dadurch gekennzeichnet, dass** der Steuerkolben (64) zumindest bereichsweise in einem Gehäuse (62) verschiebbar gehalten ist und an seinem Umfang zwei Dichtungen (76, 77) aufweist, zwischen denen ein Verbindungsraum (78) gebildet ist, dass das Gehäuse (62) innen im Bereich des Verbindungsraums (78) eine Öffnung (74) mit Verbindung zum Anschluss für Vorratsbehälterdruck (57) und eine Öffnung (75) mit Verbindung zum Anschluss als Druckausgang (55) aufweist, und dass der Steuerkolben (64) wenigstens mit einer der Dichtungen (76, 77) über eine der Öffnungen (74, 75) hinweg bewegbar ist, so dass in einer Fahrtstellung des Steuerkolbens (64) die Öffnungen (74, 75) über den Verbindungsraum (78) miteinander verbunden sind, nicht jedoch in einer Parkstellung des Steuerkolbens (64).

14. Park-Löse-Ventil nach Anspruch 1 oder einem der weiteren voranstehenden Ansprüche, **gekennzeichnet durch** ein Ventil (103) zum Sperren oder Durchleiten des Vorratsdrucks auf den Schieber (63), wobei das Ventil (103) in Abhängigkeit von einem Steuerdruck steuerbar ist und so eine Verbindung zum Sperren oder Durchleiten des Vorratsdrucks sperrt oder freigibt.

15. Park-Löse-Ventil nach Anspruch 14, **dadurch gekennzeichnet, dass** das Ventil (103) einen ersten Ventilkörper (109) aufweist, der in einem Ventilraum (108) zwischen dem Anschluss für Vorratsdruck (56) und einer in einen Arbeitsraum (93) des Schiebers (63) mündenden Öffnung (94) vorgesehen ist, dass der erste Ventilkörper (109) bewegbar ist zwischen einer Öffnungsstellung und einer Sperrstellung, dass der erste Ventilkörper (109) nur in die Öffnungsstellung bewegbar ist, solange Vorratsdruck anliegt, dass der erste Ventilkörper (109) in seiner Öffnungsstellung verbleibt, solange Vorratsdruck anliegt, und dass der erste Ventilkörper (109) ohne Vorratsdruck in Sperrstellung verbleibt.

16. Park-Löse-Ventil nach Anspruch 15, **dadurch gekennzeichnet, dass** der erste Ventilkörper (109) durch ein Federmittel (114) in Richtung auf die Sperrstellung belastet ist.

17. Park-Löse-Ventil nach Anspruch 15 oder 16, **dadurch gekennzeichnet, dass** ein zweiter Ventilkörper (118) zwischen dem ersten Ventilkörper (109) und einem Steuereingang (104) vorgesehen ist, wobei der erste Ventilkörper (109) durch den zweiten Ventilkörper (118) beaufschlagbar und so von der Sperrstellung in die Öffnungsstellung bewegbar ist.

18. Park-Löse-Ventil nach Anspruch 17, **dadurch gekennzeichnet, dass** der zweite Ventilkörper (118) fliegend in seiner Ventilkammer (116) angeordnet ist, also ohne Beaufschlagung durch Federmittel.

19. Park-Löse-Ventil nach Anspruch 17 oder 18, **dadurch gekennzeichnet, dass** der Ventilraum (108) dem zweiten Ventilkörper (118) gegenüberliegend einen Ausgang für Entlüftung (105) aufweist, wobei die Entlüftung insbesondere in Öffnungsstellung des ersten Ventilkörpers (109) verschlossen ist.

20. Park-Löse-Ventil nach Anspruch 18 oder 19, **dadurch gekennzeichnet, dass** der erste Ventilkörper (109) in Sperrstellung einen Übergang von der Ventilkammer (116) zum Ventilraum (108) abdichtet.

21. Park-Löse-Ventil nach Anspruch 15 oder einem der weiteren voranstehenden Ansprüchen, **dadurch gekennzeichnet, dass** der erste Ventilkörper (109) einen Verbindungskanal (111) als Überströmkanal aufweist, welcher in Öffnungsstellung mit Vorratsdruck beaufschlagbar ist.

22. Ventilanordnung für ein Anhängefahrzeug, mit einem Park-Löse-Ventil (23) nach einem der voranstehenden Ansprüche und mit einer Ventilanordnung (37) als Notbremsventil, wobei ein Anschluss als Druckausgang (55) des Park-Löse-Ventils (23) mit einem Steuereingang (38) der Ventilanordnung (37) verbunden ist.

23. Ventilanordnung nach Anspruch 22, **dadurch gekennzeichnet, dass** die Ventilanordnung (37) einen Anschluss (40) als Druckausgang, einen Anschluss (39) für Vorratsbehälterdruck (57) und einen Anschluss (41) für Entlüftung aufweist, und dass je nach Schaltstellung der Anschluss (40) als Druckausgang mit dem Anschluss (39) für Vorratsbehälterdruck oder mit dem Anschluss (41) für Entlüftung verbindbar ist.

24. Pneumatische Bremsanlage mit einer Ventilanordnung nach Anspruch 22 oder 23 oder mit einem Park-Löse-Ventil nach einem oder mehreren der Ansprüche 1 bis 21.

25. Anhängefahrzeug mit einer pneumatischen Bremsanlage nach Anspruch 24.

## Claims

1. Park release valve (23) for a trailer vehicle having a pneumatic brake system, and having the following features:
a)
- a port for supply pressure (56),
- a port for reservoir pressure (57),
- an outlet for venting (61),
- a port as pressure outlet (55),
b) a control piston (64) for opening and blocking a connection from the port for reservoir pressure (57) to the port as pressure outlet (55) and for opening and blocking a connection from the port for venting (61) to the port as pressure outlet (55),
c) the control piston (64) is axially movable by means of an operating element (65) between a drive position and a park position, wherein, in the park position, the connection from the outlet for venting (61) to the port as pressure outlet (55) is opened and the connection from the port for reservoir pressure (57) to the port as pressure outlet (55) is blocked,
d) in the park position and without pressure at the port for supply pressure (56), the control piston (64) is loaded by a slide (63) with an axially acting force in a direction (R) from the drive position to the park position,
e) with pressure at the port for supply pressure (56), an axial force acts on the slide (63) in a direction (G) from the park position to the drive position of the control piston (64).

2. Park release valve according to Claim 1, **characterized by** a blocking member (85) which is movable between a blocking position and a release position, wherein the control piston (64) and slide (63) are coupled to one another in the blocking position in such a way that the slide (63) can carry along the control piston (64), starting from the drive position, in the direction (R) of the park position.

3. Park release valve according to Claim 1 or 2, **characterized by** an unblocking member (66) for controlling the movement of the blocking member (85) between the blocking position and release position.

4. Park release valve according to Claim 3, **characterized in that** the unblocking member (66) interacts with a spring means (87) of the blocking member (85), wherein the spring means (87) urges the blocking member (85) in particular in the direction of the release position, and the blocking member (85) can be urged by the unblocking member (66) in the direction of the blocking position.

5. Park release valve according to Claim 3 or 4, **characterized in that** the control piston (64) is hollow, and **in that** the unblocking member (66) is movable in the manner of a piston within the control piston (64).

6. Park release valve according to Claim 5, **characterized in that** the blocking member (85) is movably mounted in a wall of the control piston (64) and has a sliding head for bearing against a sliding surface (99) of the unblocking member (66), and **in that** the sliding surface (99) is oriented at an angle to the axial direction of the unblocking member (66).

7. Park release valve according to Claim 5 or 6, **characterized in that** the unblocking member (66) is provided with an operating element (67) which projects beyond the operating element (65) of the control piston (64) .

8. Park release valve according to Claim 5 or one of the further preceding claims, **characterized in that** the unblocking member (66) is axially loaded by a spring means (95) in the direction (R) of the park position of the control piston (64).

9. Park release valve according to Claim 3 or one of the further preceding claims, **characterized in that** the unblocking member (66) is coupled to the control piston (64) in such a way that the unblocking member (66) is movable in at least one axial direction and relative to the control piston (64) only up to a point at which a stop (97, 98) bears.

10. Park release valve according to Claim 1 or one of the further preceding claims, **characterized in that** the slide (63) partially encompasses the control piston (64) in the park position, and **in that** the slide (63) has, at a free end which does not encompass the control piston (64) in the park position, a radially outwardly directed stop, in particular a collar (71), for bearing against a shoulder (82) of a housing (62).

11. Park release valve according to Claim 1 or one of the further preceding claims, **characterized in that** the slide (63) is mounted so as to be displaceable in the manner of a piston in a housing (62), **in that** the slide (63) is hollow and at least partially receives the control piston (64) within it, and **in that** the control piston (64) is hollow and at least partially receives an unblocking member (66) within it.

12. Park release valve according to Claim 1 or one of the further preceding claims, **characterized in that** the slide (63) is displaceably held in a housing (62) and has at its circumference two seals (91, 92) between which a working space (93) is formed, and **in that** the housing (62) has internally in the region of the working space (93) an opening (94) with connection to the port for supply pressure (56).

13. Park release valve according to Claim 1 or one of the further preceding claims, **characterized in that** the control piston (64) is displaceably held in a housing (62) at least in certain regions and has at its circumference two seals (76, 77) between which a connecting space (78) is formed, **in that** the housing (62) has internally in the region of the connecting space (78) an opening (74) with connection to the port for reservoir pressure (57) and an opening (75) with connection to the port as pressure outlet (55), and **in that** the control piston (64) is movable at least with one of the seals (76, 77) beyond one of the openings (74, 75), with the result that, in a drive position of the control piston (64), the openings (74, 75) are connected to one another via the connecting space (78), but not in a park position of the control piston (64).

14. Park release valve according to Claim 1 or one of the further preceding claims, **characterized by** a valve (103) for blocking or channelling through the supply pressure to the slide (63), wherein the valve (103) can be controlled in dependence on a control pressure and thus blocks or releases a connection for blocking or channelling through the supply pressure.

15. Park release valve according to Claim 14, **characterized in that** the valve (103) has a first valve body (109) which is provided in a valve space (108) between the port for supply pressure (56) and an opening (94) opening into a working space (93) of the slide (63), **in that** the first valve body (109) is movable between an open position and a blocking position, **in that** the first valve body (109) is movable only into the open position as long as supply pressure is present, **in that** the first valve body (109) remains in its open position as long as supply pressure is present, and **in that** the first valve body (109) remains in the blocking position without supply pressure.

16. Park release valve according to Claim 15, **characterized in that** the first valve body (109) is loaded by a spring means (114) in the direction of the blocking position.

17. Park release valve according to Claim 15 or 16, **characterized in that** a second valve body (118) is provided between the first valve body (109) and a control inlet (104), wherein the first valve body (109) can be acted upon by the second valve body (118) and is thus movable from the blocking position into the open position.

18. Park release valve according to Claim 17, **characterized in that** the second valve body (118) is arranged in its valve chamber (116) in a floating manner, that is to say without loading by spring means.

19. Park release valve according to Claim 17 or 18, **characterized in that** the valve space (108) has, opposite to the second valve body (118), an outlet for venting (105), wherein the venting is closed in particular in the open position of the first valve body (109).

20. Park release valve according to Claim 18 or 19, **characterized in that**, in the blocking position, the first valve body (109) seals a passage from the valve chamber (116) to the valve space (108).

21. Park release valve according to Claim 15 or one of the further preceding claims, **characterized in that** the first valve body (109) has a connecting duct (111) as overflow duct which can be charged with supply pressure in the open position.

22. Valve arrangement for a trailer vehicle, having a park release valve (23) according to one of the preceding claims and having a valve arrangement (37) as emergency brake valve, wherein a port as pressure outlet (55) of the park release valve (23) is connected to a control inlet (38) of the valve arrangement (37).

23. Valve arrangement according to Claim 22, **characterized in that** the valve arrangement (37) has a port (40) as pressure outlet, a port (39) for reservoir pressure (57) and a port (41) for venting, and **in that**, depending on the switching position, the port (40) as pressure outlet can be connected to the port (39) for reservoir pressure or to the port (41) for venting.

24. Pneumatic brake system having a valve arrangement according to Claim 22 or 23 or having a park release valve according to one or more of Claims 1 to 21.

25. Trailer vehicle having a pneumatic brake system according to Claim 24.

## Revendications

1. Soupape de relâchement de frein de stationnement (23) pour un véhicule remorque avec une installation de frein pneumatique, et comprenant les caractéristiques suivantes :
a)
- un raccord pour une pression de stockage (56),
- un raccord pour une pression de réservoir de stockage (57),
- une sortie pour le désaérage (61),
- un raccord en tant que sortie de pression (55),
b) un piston de commande (64) pour ouvrir et fermer une connexion du raccord pour la pression de réservoir de stockage (57) au raccord en tant que sortie de pression (55) et pour ouvrir et fermer une connexion de la sortie pour le désaérage (61) au raccord en tant que sortie de pression (55),
c) le piston de commande (64) peut être déplacé axialement par un élément d'actionnement (65) entre une position de conduite et une position de stationnement, dans la position de stationnement, la connexion de la sortie pour le désaérage (61) au raccord en tant que sortie de pression (55) étant ouverte et la connexion du raccord pour la pression de réservoir de stockage (57) au raccord en tant que sortie de pression (55) étant fermée,
d) le piston de commande (64), dans la position de stationnement et sans pression au niveau du raccord pour la pression de stockage (56), est sollicité par un coulisseau (63) avec une force agissant axialement dans une direction (R) de la position de conduite à la position de stationnement,
e) en cas de pression exercée au niveau du raccord pour la pression de stockage (56), une force axiale agit sur le coulisseau (63) dans une direction (G) de la position de stationnement à la position de conduite du piston de commande (64) .

2. Soupape de relâchement de frein de stationnement selon la revendication 1, **caractérisée par** un organe de blocage (85) déplaçable entre une position de blocage et une position de libération, le piston de commande (64) et le coulisseau (63) étant accouplés l'un à l'autre dans la position de blocage de telle sorte que le coulisseau (63) puisse entraîner le piston de commande (64) de la position de conduite dans la direction (R) jusqu'à la position de stationnement.

3. Soupape de relâchement de frein de stationnement selon la revendication 1 ou 2, **caractérisée par** un organe de déblocage (66) pour commander le déplacement de l'organe de blocage (85) entre la position de blocage et la position de libération.

4. Soupape de relâchement de frein de stationnement selon la revendication 3, **caractérisée en ce que** l'organe de déblocage (66) coopère avec un moyen de ressort (87) de l'organe de blocage (85), le moyen de ressort (87) sollicitant l'organe de blocage (85) notamment dans la direction de la position de libération et l'organe de blocage (85) pouvant être sollicité par l'organe de déblocage (66) dans la direction de la position de blocage.

5. Soupape de relâchement de frein de stationnement selon la revendication 3 ou 4, **caractérisée en ce que** le piston de commande (64) est creux et **en ce que** l'organe de déblocage (66) peut être déplacé à la manière d'un piston à l'intérieur du piston de commande (64).

6. Soupape de relâchement de frein de stationnement selon la revendication 5, **caractérisée en ce que** l'organe de blocage (85) est supporté de manière déplaçable dans une paroi du piston de commande (64) et présente une tête de glissement pour l'application contre une surface de glissement (99) de l'organe de déblocage (66), et **en ce que** la surface de glissement (99) est orientée suivant un certain angle par rapport à la direction axiale de l'organe de déblocage (66).

7. Soupape de relâchement de frein de stationnement selon la revendication 5 ou 6, **caractérisée en ce que** l'organe de déblocage (66) est pourvu d'un élément de commande (67) qui fait saillie au-delà de l'élément d'actionnement (65) du piston de commande (64).

8. Soupape de relâchement de frein de stationnement selon la revendication 5 ou selon l'une quelconque des autres revendications précédentes, **caractérisée en ce que** l'organe de déblocage (66) est sollicité axialement par un moyen de ressort (95) dans la direction (R) jusqu'à la position de stationnement du piston de commande (64).

9. Soupape de relâchement de frein de stationnement selon la revendication 3 ou selon l'une quelconque des autres revendications précédentes, **caractérisée en ce que** l'organe de déblocage (66) est accouplé au piston de commande (64), de telle sorte que l'organe de déblocage (66) puisse être déplacé dans au moins une direction axiale et par rapport au piston de commande (64) seulement jusqu'à venir en appui contre une butée (97, 98).

10. Soupape de relâchement de frein de stationnement selon la revendication 1 ou selon l'une quelconque des autres revendications précédentes, **caractérisée en ce que** le coulisseau (63) comprend en partie le piston de commande (64) dans la position de stationnement, et **en ce que** le coulisseau (63), au niveau d'une extrémité libre qui ne comprend pas le piston de commande (64) dans la position de stationnement, présente une butée orientée radialement vers l'extérieur, en particulier un collet (71) pour venir en butée contre un épaulement (82) d'un boîtier (62).

11. Soupape de relâchement de frein de stationnement selon la revendication 1 ou selon l'une quelconque des autres revendications précédentes, **caractérisée en ce que** le coulisseau (63) est supporté de manière déplaçable à la manière d'un piston dans un boîtier (62), **en ce que** le coulisseau (63) est creux et reçoit en lui-même au moins en partie le piston de commande (64) et **en ce que** le piston de commande (64) est creux et reçoit en lui-même au moins en partie un organe de déblocage (66).

12. Soupape de relâchement de frein de stationnement selon la revendication 1 ou selon l'une quelconque des autres revendications précédentes, **caractérisée en ce que** le coulisseau (63) est retenu de manière déplaçable dans un boîtier (62) et présente au niveau de sa périphérie deux joints d'étanchéité (91, 92) entre lesquels est formé un espace de travail (93), et **en ce que** le boîtier (62) présente à l'intérieur, dans la région de l'espace de travail (93), une ouverture (94) avec une connexion au raccord pour la pression de stockage (56) .

13. Soupape de relâchement de frein de stationnement selon la revendication 1 ou selon l'une quelconque des autres revendications précédentes, **caractérisée en ce que** le piston de commande (64) est retenu de manière déplaçable au moins en partie dans un boîtier (62) et présente au niveau de sa périphérie deux joints d'étanchéité (76, 77) entre lesquels est formé un espace de connexion (78), **en ce que** le boîtier (62) présente à l'intérieur, dans la région de l'espace de connexion (78), une ouverture (74) avec une connexion au raccord pour la pression de réservoir de stockage (57) et une ouverture (75) avec une connexion au raccord en tant que sortie de pression (55), et **en ce que** le piston de commande (64) peut être déplacé au moins avec l'un des joints d'étanchéité (76, 77) au-delà de l'une des ouvertures (74, 75), de telle sorte que dans une position de conduite du piston de commande (64), les ouvertures (74, 75) soient connectées l'une à l'autre par le biais de l'espace de connexion (78) mais pas dans une position de stationnement du piston de commande (64).

14. Soupape de relâchement de frein de stationnement selon la revendication 1 ou selon l'une quelconque des autres revendications précédentes, **caractérisée par** une soupape (103) pour bloquer ou permettre le passage de la pression de stockage vers le coulisseau (63), la soupape (103) pouvant être commandée en fonction d'une pression de commande et bloquant ou libérant ainsi une connexion pour bloquer ou permettre le passage de la pression de stockage.

15. Soupape de relâchement de frein de stationnement selon la revendication 14, **caractérisée en ce que** la soupape (103) présente un premier corps de soupape (109) qui est prévu dans un espace de soupape (108) entre le raccord pour la pression de stockage (56) et une ouverture (94) débouchant dans un espace de travail (93) du coulisseau (63), **en ce que** le premier corps de soupape (109) peut être déplacé entre une position d'ouverture et une position de blocage, **en ce que** le premier corps de soupape (109) peut seulement être déplacé dans la position d'ouverture tant qu'une pression de stockage s'applique, **en ce que** le premier corps de soupape (109) reste dans sa position d'ouverture tant que la pression de stockage s'applique et **en ce que** le premier corps de soupape (109) reste dans la position de blocage sans pression de stockage.

16. Soupape de relâchement de frein de stationnement selon la revendication 15, **caractérisée en ce que** le premier corps de soupape (109) est sollicité par un moyen de ressort (114) dans la direction de la position de blocage.

17. Soupape de relâchement de frein de stationnement selon la revendication 15 ou 16, **caractérisée en ce qu'**il est prévu un deuxième corps de soupape (118) entre le premier corps de soupape (109) et une entrée de commande (104), le premier corps de soupape (109) pouvant être sollicité par le deuxième corps de soupape (118) et pouvant ainsi être déplacé de la position de blocage dans la position d'ouverture.

18. Soupape de relâchement de frein de stationnement selon la revendication 17, **caractérisée en ce que** le deuxième corps de soupape (118) est disposé de manière flottante dans sa chambre de soupape (116), c'est-à-dire sans sollicitation par un moyen de ressort.

19. Soupape de relâchement de frein de stationnement selon la revendication 17 ou 18, **caractérisée en ce que** l'espace de soupape (108) présente, à l'opposé du deuxième corps de soupape (118), une sortie de désaérage (105), le désaérage étant notamment fermé dans la position d'ouverture du premier corps de soupape (109).

20. Soupape de relâchement de frein de stationnement selon la revendication 18 ou 19, **caractérisée en ce que** le premier corps de soupape (109), dans la position de blocage, étanchéifie une transition de la chambre de soupape (116) à l'espace de soupape (108) .

21. Soupape de relâchement de frein de stationnement selon la revendication 15 ou selon l'une quelconque des autres revendications précédentes, **caractérisée en ce que** le premier corps de soupape (109) présente un canal de connexion (111) en tant que canal de débordement, lequel peut être sollicité dans la position d'ouverture avec une pression de stockage.

22. Agencement de soupape pour un véhicule remorque, comprenant une soupape de relâchement de frein de stationnement (23) selon l'une quelconque des revendications précédentes et comprenant un agencement de soupape (37) en tant que soupape de frein de secours, un raccord en tant que sortie de pression (55) de la soupape de relâchement de frein de stationnement (23) étant connecté à une entrée de commande (38) de l'agencement de soupape (37) .

23. Agencement de soupape selon la revendication 22, **caractérisé en ce que** l'agencement de soupape (37) présente un raccord (40) en tant que sortie de pression, un raccord (39) pour la pression de réservoir de stockage (57) et un raccord (41) pour le désaérage, et **en ce qu'**en fonction de la position de commutation, le raccord (40) en tant que sortie de pression peut être connecté au raccord (39) pour la pression de réservoir de stockage ou au raccord (41) pour le désaérage.

24. Installation de frein pneumatique comprenant un agencement de soupape selon la revendication 22 ou 23, ou comprenant une soupape de relâchement de frein de stationnement selon l'une quelconque ou plusieurs des revendications 1 à 21.

25. Véhicule remorque comprenant une installation de frein pneumatique selon la revendication 24.
